**Europäisches Patentamt**

**European Patent Office**

**Office européen des brevets**

(19)

(11) . Veröffentlichungsnummer : **0 129 135**
**B1**

(12) **EUROPÄISCHE PATENTSCHRIFT**

(45) Veröffentlichungstag der Patentschrift :
28.09.88

(21) Anmeldenummer : 84106361.3

(22) Anmeldetag : 04.06.84

(51) Int. Cl.⁴ : **C 03 B 37/16**

(54) Verfahren und Vorrichtung zum Trennen von Lichtwellenleitern.

(30) Priorität : 20.06.83 DE 3322127

(43) Veröffentlichungstag der Anmeldung :
27.12.84 Patentblatt 84/52

(45) Bekanntmachung des Hinweises auf die Patenterteilung : 28.09.88 Patentblatt 88/39

(84) Benannte Vertragsstaaten :
AT BE CH DE FR GB IT LI LU NL SE

(56) Entgegenhaltungen :
GB-A- 1 519 232
US-A- 4 159 793
US-A- 4 257 546

(73) Patentinhaber : Siemens Aktiengesellschaft Berlin und München
Wittelsbacherplatz 2
D-8000 München 2 (DE)

(72) Erfinder : Krause, Dieter
Ravensburger Ring 65
D-8000 München 60 (DE)

## Beschreibung

Die Erfindung bezieht sich auf ein Verfahren zum Trennen von Lichtwellenleitern gemäß dem Oberbegriff des Anspruchs 1 und auf eine Vorrichtung zum Trennen von Lichtwellenleitern gemäß dem Oberbegriff des Anspruchs 3.

Ein derartiges Verfahren und eine derartige Vorrichtung sind beispielsweise aus der DE-C-29 25 070 bekannt. Der zu trennende Lichtwellenleiter wird dabei in die geöffneten Klemmeinrichtungen eingelegt, worauf die Klemmeinrichtungen geschlossen werden und der Lichtwellenleiter mit Hilfe der Zugeinrichtung in axialer Richtung über dem Amboß vorgespannt wird. Anschließend wird der derart vorgespannte Lichtwellenleiter mit Hilfe der Ritzeinrichtung quer zu seiner Längsrichtung geritzt, wodurch der Trennvorgang ausgelöst wird. Nach dem Trennen gehen dann die Ritzeinrichtung und die Zugeinrichtung wieder in ihre Ausgangsstellung zurück, so daß nach dem Öffnen der Klemmeinrichtungen der Lichtwellenleiter und das abgetrennte Lichtwellenleiterende entnommen werden können.

Die Endflächen der getrennten Lichtwellenleiter weisen jedoch meist nicht die für eine Weiterverarbeitung erforderliche Genauigkeit auf, so daß eine nachträgliche Bearbeitung der Endflächen erforderlich ist. Insbesondere beim Trennen von Monomodefasern weisen im Durchschnitt nur etwa 30 % eine brauchbare Endfläche auf, deren Winkelabweichung zu einer queraxial ausgerichteten Fläche weniger als 1° beträgt und deren Qualität nicht durch Kerben, Risse und sonstige Unebenheiten beeinträchtigt ist. Der erzielbare Prozentsatz brauchbarer Endflächen ist dabei auch in erheblichem Maße von der Geschicklichkeit der jeweiligen Bedienungsperson abhängig, da die Qualität der Endflächen von der Einstellung und der Art der Betätigung der Zugeinrichtung und der Ritzeinrichtung abhängig ist.

Der Erfindung liegt die Aufgabe zugrunde, ein Verfahren und eine Vorrichtung der eingangs genannten Art so zu verbessern, daß unabhängig von der Geschicklichkeit der jeweiligen Bedienungsperson eine gleichbleibend gute Qualität der Endflächen der getrennten Lichtwellenleiter erzielt wird.

Diese Aufgabe wird bei einem Verfahren der eingangs genannten Art durch die im kennzeichnenden Teil des Anspruchs 1 aufgeführten Merkmale und bei einer Vorrichtung der eingangs genannten Art durch die im kennzeichnenden Teil des Anspruchs 3 aufgeführten Merkmale gelöst.

Der Erfindung liegt die Erkenntnis zugrunde, daß die Art der Handhabung des Betätigungsgliedes dann ohne Einfluß auf die Qualität der Endflächen bleibt, wenn die Klemmeinrichtungen, die Zugeinrichtung und die Ritzeinrichtung nicht mit der Betätigung, sondern erst mit der Entlastung des Betätigungsgliedes selbsttätig betätigt werden. Durch diese Ausschaltung manueller Einflüsse konnten beim Trennen von Monomodefasern mit Faserkerndurchmessern unter 10 μm mit nahezu 100 %iger Wahrscheinlichkeit einwandfreie Endflächen erzielt werden, deren Winkelabweichung zu einer queraxial ausgerichteten Fläche stets unter 1° lag.

Bei einer bevorzugten Ausgestaltung des erfindungsgemäßen Verfahrens wird nach dem Trennen eines Lichtwellenleiters diejenige Klemmeinrichtung, in welcher der Lichtwellenleiter festgehalten ist, separat geöffnet. Der Lichtwellenleiter kann also dann entnommen werden, wenn in der Spannstellung der Zugeinrichtung die Endflächen von Lichtwellenleiter und abgetrenntem Lichtwellenleiterende beim Trennvorgang etwas auseinandergerückt sind. Demgegenüber besteht bei einem Öffnen der Klemmeinrichtung über eine Betätigung des gemeinsamen Betätigungsgliedes die Gefahr, daß sich die Endflächen von Lichtwellenleiter und abgetrenntem Lichtwellenleiterende in der Vorspannungstellung der Zugeinrichtung berühren und hierdurch die Endfläche des Lichtwellenleiters möglicherweise beschädigt wird.

Bevorzugte Ausgestaltungen der erfindungsgemäßen Vorrichtung zum Trennen von Lichtwellenleitern gehen aus den Unteransprüchen 4 bis 14 hervor.

Im folgenden wird ein Ausführungsbeispiel der Erfindung anhand der Zeichnung näher erläutert. Dabei zeigen

Fig. 1 eine Vorrichtung zum Trennen von Lichtwellenleitern in stark vereinfachter schematischer Darstellung,

Fig. 2 den Betätigungsablauf der Ritzeinrichtung, der Zugeinrichtung und der beiden Klemmeinrichtungen in Abhängigkeit von dem Betätigungsweg eines gemeinsamen Betätigungsgliedes,

Fig. 3 eine Vorrichtung zum Trennen von Lichtwellenleitern entsprechend Fig. 1 in konkreter, teilweise aufgebrochener Darstellung,

Fig. 4 die komplette Vorrichtung nach Fig. 3,

Fig. 5 einen Querschnitt durch die in den Fig. 3 und 4 dargestellte Vorrichtung im Bereich einer Klemmeinrichtung und

Fig. 6 einen Querschnitt durch die in den Fig. 3 und 4 dargestellte Vorrichtung im Bereich der Ritzeinrichtung.

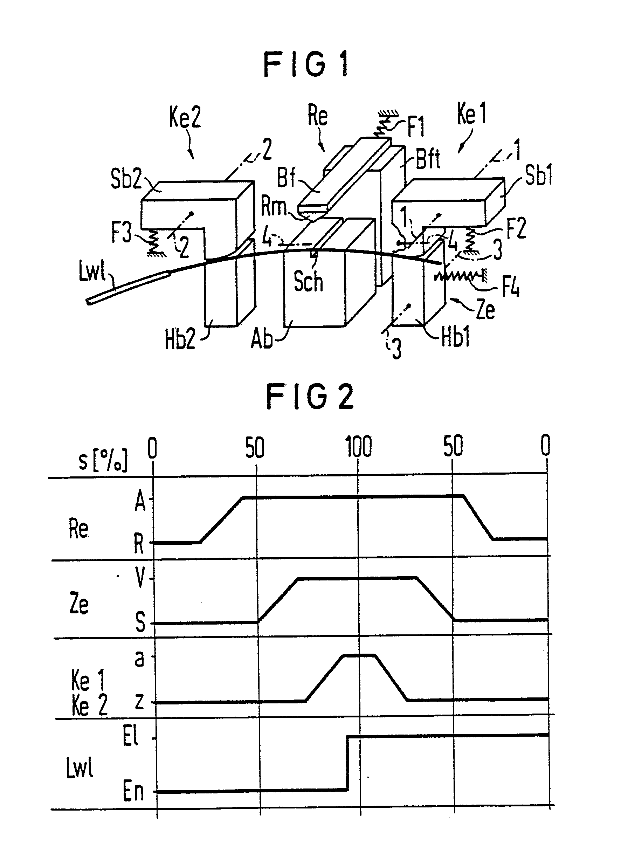

Fig. 1 zeigt in stark vereinfachter schematischer Darstellung eine Vorrichtung zum Trennen von Lichtwellenleitern, welche im wesentlichen aus zwei Klemmeinrichtungen Ke1 und Ke2 zum Festhalten des zu trennenden Lichtwellenleiters Lw1, einer Zugeinrichtung Ze zum axialen Vorspannen des über einen Amboß Ab geführten Lichtwellenleiters Lw1 und einer Ritzeinrichtung Re zum queraxialen Ritzen des Lichtwellenleiters Lw1 an der über dem Amboß Ab liegenden Trennstelle besteht.

Die erste seitlich neben dem Amboß Ab angeordnete Klemmeinrichtung Ke1 besitzt eine Haltebacke Hb1 und eine um eine queraxial zum Lichtwellenleiter Lw1 ausgerichtete Achse 1-1 schwenkbare Spannbacke Sb1. Die Spannbacke Sb1 kann dabei gegen die Kraft einer als Druckfeder ausgebildeten Feder F2 um die Achse 1-1 in eine erste Position gebracht werden, in welcher der Lichtwellenleiter Lw1 zwischen die Haltebacke Hb1 und die Spannbacke Sb1 eingelegt werden kann. In der dieser ersten Position entgegengesetzten Schließposition wir dann der Lichtwellenleiter Lw1 durch die Kraftwirkung der Feder F2 zwischen der Haltebacke Hb1 und der Spannbacke Sb1 festgeklemmt.

Die zweite auf der anderen Seite des Ambosses Ab angeordnete Klemmeinrichtung Ke2 besitzt eine Haltebacke Hb2 und eine um eine queraxial zum Lichtwellenleiter Lw1 ausgerichtete Achse 2-2 schwenkbare Spannbacke Sb2. Die Spannbacke Sb2 kann dabei gegen die Kraft einer als Druckfeder ausgebildeten Feder F3 um die Achse 2-2 in eine erste Position gebracht werden, in welcher der Lichtwellenleiter Lw1 zwischen die Haltebacke Hb2 und die Spannbacke Sb2 eingelegt werden kann. In der dieser ersten Position entgegengesetzten Schließposition wird dann der Lichtwellenleiter Lw1 durch die Kraftwirkung der Feder F3 zwischen der Haltebacke Hb2 und der Spannbacke Sb2 festgeklemmt.

Die Zugeinrichtung Ze wird dadurch gebildet, daß die erste Klemmeinrichtung Ke1 insgesamt um eine queraxial zum Lichtwellenleiter Lw1 ausgerichtete Achse 3-3 geschwenkt werden kann. Die Klemmeinrichtung Ke1 kann dabei um die im Bereich der Haltebacke Hb1 angeordnete Achse 3-3 gegen die Kraft einer im vorliegenden Fall als Zugfeder ausgebildeten Feder F4 in eine erste Position geschwenkt werden, welche einer Vorspannstellung der Zugeinrichtung Ze entspricht. In der dieser ersten Position entgegengesetzten Spannstellung der Zugeinrichtung Ze wird in dem zwischen den Klemmeinrichtungen Ke1 und Ke2 liegenden Bereich des Lichtwellenleiters Lw1 eine in axialer Richtung wirkende Vorspannung erzeugt.

Die Ritzeinrichtung Re besitzt einen an einer Blattfeder Bf befestigten Ritzmeißel Rm, wobei die Blattfeder Bf ihrerseits an einem um eine parallel zum Lichtwellenleiter Lw1 ausgerichtete Achse 4-4 schwenkbaren Blattfederträger Bft befestigt ist. Die gesamte Ritzeinrichtung Re kann dabei um die Achse 4-4 gegen die Kraft einer als Druckfeder ausgebildeten Feder F1 in eine erste Position geschwenkt werden, in welcher der Ritzmeißel Rm im Abstand zu dem Lichtwellenleiter Lw1 angeordnet ist. Aus dieser ersten Position kann dann die Ritzeinrichtung Re durch die Kraftwirkung der Feder F1 so bewegt werden, daß der Ritzmeißel Rm den über den Amboß gespannten Lichtwellenleiter Lw1 bei radialer Zustellung queraxial ritzt und damit den Trennvorgang auslöst.

Der Amboß Ab besitzt eine in Längsrichtung des Lichtwellenleiters Lw1 zylindrisch gekrümmte Auflagefläche, in welche ein queraxial zum Lichtwellenleiter Lw1 verlaufender Schlitz Sch eingebracht ist. Dieser symmetrisch zur Ritzebene des Ritzmeißels Rm verlaufende Schlitz Sch Begünstigt an der Anritzstelle eine annähernd symmetrische Spannungsverteilung im Querschnitt des Lichtwellenleiters Lw1.

Die in Fig. 1 schematisch dargestellte Vorrichtung zum Trennen von Lichtwellenleitern Lw1 ist mit einem in der Zeichnung nicht näher dargestellten gemeinsamen Betätigungsglied ausgerüstet, über welches die Ritzeinrichtung Re, die beiden Klemmeinrichtungen Ke1 und Ke2 und die Zugeinrichtung Ze betätigt werden. Der entsprechende Betätigungsablauf ist aus Fig. 2 ersichtlich, in welcher in Abszissenrichtung der Betätigungsweg s des gemeinsamen Betätigungsgliedes aufgetragen ist. Der Betätigungsweg s ist dabei aufgeteilt in einen Betätigungshub von Null bis 100 % und einen sich bei der Entlastung des Betätigungsgliedes einstellenden Rückhub von 100 bis Null%.

Für die Ritzeinrichtung Re ist die Ordinatenrichtung unterteilt in eine Abhebeposition A und eine Ritzposition R des Ritzmeißels Rm (vergleiche Fig. 1). Beim Betätigungshub wird dabei ausgehend von der Ritzposition R nach etwa 25 % des Betätigungshubes die Abhebeposition A angesteuert. Erst beim Rückhub des Betätigungsgliedes wird dann bei etwa 30 % des Rückhubes wieder die Ritzposition R eingenommen.

Für die Zugeinrichtung Ze ist die Ordinatenrichtung unterteilt in eine Vorspannstellung V und eine Spannstellung S. Beim Betätigungshub wird dabei ausgehend von der Spannstellung S nach etwa 50 % des Betätigungshubes die Vorspannstellung V angesteuert. Erst beim Rückhub des Betätigungsgliedes wird dann bei etwa 50 % des Rückhubes wieder die Spannstellung S eingenommen, in welcher in einem eingelegten Lichtwellenleiter Lw1 eine axiale Vorspannung erzeugt wird.

Für die Klemmeinrichtungen Ke1 und Ke2 ist die Ordinatenrichtung unterteilt in eine geöffnete Position a und eine geschlossenen Position z. Beim Betätigungshub wird dabei ausgehend von der geschlossenen Position z nach etwa 75 % des Betätigungshubes die geöffnete Position a angesteuert. Erst beim Rückhub des Betätigungsgliedes wird dann bei etwa 75 % des Rückhubes wieder die geschlossene Position z eingenommen.

Für das Einlegen eines Lichtwellenleiters Lw1 ist die Ordinatenrichtung unterteilt in eine Einlegeposition El und eine Entnahmeposition En. Beim Betätigungshub wird dabei ausgehend von der Entnahmeposition En nach etwa 90 % des Betätigungshubes die Einlegeposition El erreicht, in welcher der Lichtwellenleiter in die geöffneten Klemmeinrichtungen Ke1 und Ke2 eingelegt werden kann. Nach Ausführung des Rückhubes ist dann für die Entnahme des Lichtwellenleiters Lw1 ein separates Öffnen der Klemmeinrichtung Ke2 vorgesehen. Hierdurch wird eine mögliche Beschädigung der Endfläche in der Vorspannstellung V der Zugeinrichtung Ze ausgeschlossen.

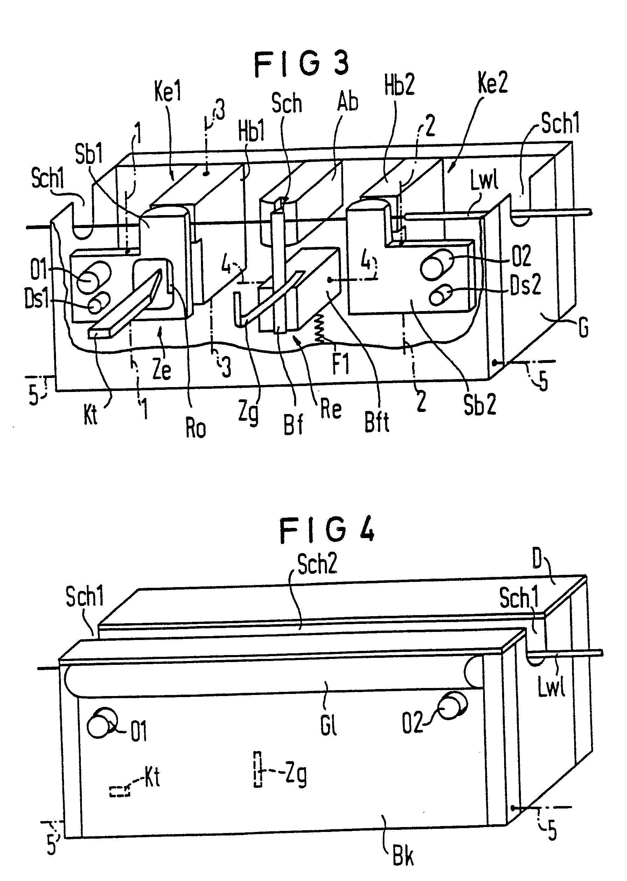

Die Fig. 3 und 4 zeigen eine Vorrichtung zum Trennen von Lichtwellenleitern, welche auf dem in den Fig. 1 und 2 dargestellten Prinzip basiert.

Diese Vorrichtung ist in einem quaderförmigen Gehäuse G untergebracht, dessen Stirnseiten und dessen oberer Deckel D mit Schlitzen Sch1 bzw. Sch2 für das Einlegen des Lichtwellenleiters Lw1 vorgesehen sind. Die Vorderseite des Gehäuses G wird im wesentlichen durch eine als gemeinsames Betätigungsglied dienende Betätigungsklappe Bk gebildet, welche um eine Achse 5-5 schwenkbar ist. Für die Betätigung der Ritzeinrichtung Re ist auf der Innenseite der Betätigungsklappe Bk ein blattfederartiges Zwischenglied Zg angebracht, über welches der Blattfederträger Bft beim Betätigungshub um die Achse 4-4 geschwenkt werden kann, bis die Ritzeinrichtung Re in die Abhebeposition A (vergleiche Fig. 2) gebracht ist. Auf dem restlichen Betätigungshub wird dann das blattfederartige Zwischenglied Zg nur noch elastisch verformt. Für die Betätigung der Klemmeinrichtungen Ke1 und Ke2 sind an den Spannbacken Sb1 und Sb2 zylindrische Druckstücke Ds1 bzw. Ds2 angebracht. Bei Betätigungshub drückt dann die Betätigungsklappe Bk auf diese Druckstücke Ds1 und Ds2, bis die Klemmeinrichtungen Ke1 und Ke2 die geöffnete Position a (vergleiche Fig. 2) einnehmen. Für die Betätigung der Zugeinrichtung Ze ist auf der Innenseite der Betätigungsklappe Bk ein Kulissenträger Kt angebracht, welcher im Bereich seines freien Endes keilförmig zuläuft und in diesem keilförmig zulaufenden Bereich mit einer Rolle Ro zusammenwirkt. Über die an der Klemmeinrichtung Ke1 befestigte Rolle Ro wird dann beim Betätigungshub eine Schwenkung um die Achse 3-3 bewirkt, bis die Vorspannstellung V (vergleiche Fig. 2) der Zugeinrichtung Ze erreicht ist.

Ein in die Vorrichtung nach dem Betätigungshub der Betätigungsklappe Bk eingelegter Lichtwellenleiter Lw1 wird nach dem Loslassen bzw. Entlasten der Betätigungsklappe Bk selbsttätig festgeklemmt, in axialer Richtung gespannt und geritzt. Nach dem durch das queraxiale Ritzen ausgelösten Trennvorgang wird die Klemmeinrichtung Ke2 durch ein an der Spannbacke Sb2 angebrachtes zylindrisches Öffnungsglied O2 separat geöffnet, so daß der Lichtwellenleiter Lw1 entnommen werden kann. Auch das abgetrennte Lichtwellenleiterende kann nach dem Öffnen der Klemmeinrichtung Ke1 durch ein an der Spannbacke Sb1 angebrachtes separates Öffnungsglied O1 entnommen werden. Die separate Betätigung der Öffnungsglieder O1 und O2 wird dadurch ermöglicht, daß diese durch entsprechende Öffnungen der Betätigungsklappe Bk hindurchgeführt sind.

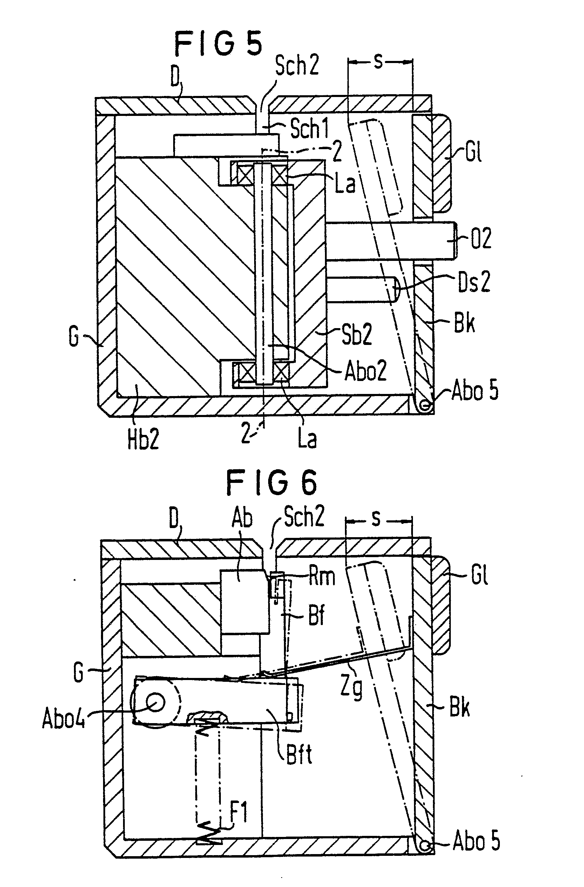

Fig. 5 zeigt einen Querschnitt durch die in den Fig. 3 und 4 dargestellte Vorrichtung im Bereich der Achse 2-2 der Klemmeinrichtung Ke2. Es ist zu erkennen, daß diese Achse 2-2 durch einen in der Haltebacke Hb2 angeordneten Achsbolzen Abo2 realisiert ist, auf welchem die Spannbacke Sb2 über Lager La schwenkbar gelagert ist. Die Schwenkung der Spannbacke Sb2 zum Öffnen der Klemmeinrichtung Ke2 kann dabei über die Betätigungsklappe Bk und das Druckstück Ds2 oder separat über das durch die Betätigungsklappe Bk hindurchgeführte Öffnungsglied O2 erfolgen. Die mit einer Griffleiste G1 versehene Betätigungsklappe Bk kann um einen der Achse 5-5 (vergleiche Fig. 3 und 4) entsprechenden Achsbolzen Abo 5 in die strichpunktierte Lage geschwenkt werden, welche dem maximalen Betätigungsweg s entspricht.

Fig. 6 zeigt einen Querschnitt durch die in den Fig. 3 und 4 dargestellte Vorrichtung im Bereich der Ritzeinrichtung Re. Es ist zu erkennen, daß die in Fig. 3 dargestellte Achse 4-4 durch einen Achsbolzen Abo4 realisiert ist, um welchen der Blattfederträger Bft geschwenkt werden kann. Die dem maximalen Betätigungsweg s entsprechende geschwenkte Lage der Betätigungsklappe Bk ist auch hier wieder strichpunktiert dargestellt. Ebenso sind die jeweiligen Stellungen des Ritzmeißels Rm, der Blattfeder Bf, des Blattfederträgers Bft und des blattfederartigen Zwischengliedes Zc nach einer Betätigung der Betätigungsklappe Bk strichpunktiert dargestellt. Dabei entspricht die strichpunktiert dargestellte Lage des Ritzmeißels Rm der in Fig. 2 dargestellten Abhebeposition A der Ritzeinrichtung Re.

**Patentansprüche**

1. Verfahren zum Trennen von Lichtwellenleitern (Lw1), insbesondere von Monomodefasern, bei welchem der zu trennende Lichtwellenleiter (Lw1) mit Hilfe von zwei Klemmeinrichtungen (ke1, Ke2) festgehalten, mit Hilfe einer Zugeinrichtung (Ze) über einen Amboß (Ab) in axialer Richtung vorgespannt und mit Hilfe einer Ritzeinrichtung (Re) auf dem Amboß (Ab) quer zu seiner Längsrichtung geritzt wird, dadurch gekennzeichnet, daß über ein gemeinsames Betätigungsglied die Ritzeinrichtung (Re), die Klemmeinrichtungen (Ke1, Ke2) und die Zugeinrichtung (Ze) jeweils gegen eine Federkraft in eine derartige Position (A, a, V) gebracht werden, daß nach dem Einlegen des zu trennenden Lichtwellenleiters (Lw1) und mit der Entlastung des Betätigungsgliedes nacheinander die Klemmeinrichtungen (Ke1, Ke2), die Zugeinrichtung (Ze) und die Ritzeinrichtung (Re) selbsttätig betätigt werden.

2. Verfahren nach Anspruch 1, dadurch gekennzeichnet, daß nach dem Trennen eines Lichtwellenleiters (Lw1) diejenige Klemmeinrichtung (Ke2), in welcher der Lichtwellenleiter (Lw1) festgehalten ist, separat geöffnet wird.

3. Vorrichtung zum Trennen von Lichtwellenleitern (Lw1), insbesondere von Monomodefasern, mit zwei Klemmeinrichtungen (Ke1, Ke2) zum Festhalten des zu trennenden Lichtwellenleiters (Lw1), mit einer Zugeinrichtung (Ze) zum axialen Vorspannen des über einen Amboß (Ab) geführten Lichtwellenleiters (Lw1) und mit einer Ritzeinrichtung (Re) zum queraxialen Ritzen des Lichtwellenleiters (Lw1) an der über dem Amboß (Ab) liegenden Trennstelle zur Durchführung des Verfahrens nach Anspruch 1, gekennzeichnet durch ein gemeinsames Betätigungsglied, mit welchem die Ritzeinrichtung (Re), die beiden Klemmeinrichtungen (Ke1, Ke2) und die Zugeinrichtung (Ze) jeweils gegen die Kraft einer Feder (F1, F2, F3, F4) durch einen Betätigungshub in eine vorbereitete Position (A, a, V) bringbar sind, woraus die Klemmeinrichtungen (Ke1, Ke2), die Zugeinrichtung (Ze) und die Ritzeinrichtung (Re) nacheinander durch Entlastung des Betätigungsgliedes unter Einfluß der Federn (F1, F2, F3, F4) zur Wirkung kommen.

4. Vorrichtung nach Anspruch 3, dadurch gekennzeichnet, daß mindestens eine der beiden Klemmeinrichtungen (Ke1, Ke2) ein separates Öffnungsglied (O1, O2) besitzt.

5. Vorrichtung nach Anspruch 3 oder 4, dadurch gekennzeichnet, daß das Betätigungsglied als schwenkbare Betätigungsklappe (Bk) ausgebildet ist.

6. Vorrichtung nach Anspruch 4 und 5, dadurch gekennzeichnet, daß das separate Öffnungsglied (O2) durch eine Öffnung der Betätigungsklappe (Bk) hindurchgeführt ist.

7. Vorrichtung nach einem der Ansprüche 3 bis 6, dadurch gekennzeichnet, daß die Ritzeinrichtung (Re) einen an einer Blattfeder (Bf) befestigten Ritzmeißel (Rm) besitzt, wobei die Blattfeder (Bf) an einen um eine parallel zum Lichtwellenleiter (Lw1) ausgerichtete Achse (1-1) schwenkbaren Blattfederträger (Bft) befestigt ist.

8. Vorrichtung nach Anspruch 7, dadurch gekennzeichnet, daß der Blattfederträger (Bft) über das Betätigungsglied und ein daran angebrachtes blattfederartiges Zwischenglied (Zg) schwenkbar ist.

9. Vorrichtung nach einem der Ansprüche 3 bis 8, dadurch gekennzeichnet, daß die Klemmrichtungen (Ke1, Ke2) jeweils aus einer Haltebacke (Hb1 und Hb2) und einer um eine queraxial zum Lichtwellenleiter (Lw1) ausgerichtete Achse (1-1, 2-2) schwenkbaren Spannbacke (Sb1, Sb2) bestehen.

10. Vorrichtung nach Anspruch 9, dadurch gekennzeichnet, daß die Spannbacke (Sb1, Sb2) über ein daran angebrachtes Druckstück (Ds1, Ds2) schwenkbar ist.

11. Vorrichtung nach einem der Ansprüche 3 bis 10, dadurch gekennzeichnet, daß die Zugeinrichtung (Ze) durch eine um eine queraxial zum Lichtwellenleiter (Lw1) ausgerichtete Achse (3-3) schwenkbare Klemmeinrichtung (Ke1) gebildet ist.

12. Vorrichtung nach Anspruch 11, dadurch gekennzeichnet, daß die Klemmeinrichtung (Ke1) durch einen an dem Betätigungsglied angebrachten Kulissenträger (Kt) schwenkbar ist.

13. Vorrichtung nach einem der Ansprüche 3 bis 12, dadurch gekennzeichnet, daß der Amboß (Ab) eine in Längsrichtung des Lichtwellenleiters (Lw1) gekrümmte Auflagefläche besitzt.

14. Vorrichtung nach einem der Ansprüche 3 bis 13, dadurch gekennzeichnet, daß in die Auflagefläche des Ambosses (Ab) ein queraxial zum Lichtwellenleiter (Lw1) ausgerichteter Schlitz (Sch) eingebracht ist.

## Claims

1. A method of severing light-waveguides (Lw1), in particular monomode fibres, in which the light-waveguide (Lw1) which is to be severed is clamped by means of two clamping devices (Ke1, Ke2), is tensioned in the axial direction by means of a tensioning device (Ze) over an anvil (Ab), and is scored transversely to its longitudinal direction by means of a scoring device (Re) on the anvil (Ab), characterised in that via a common actuating element the scoring device (Re), the clamping devices (Ke1, Ke2), and the tensioning device (Ze) are each brought, against the force of a spring, into a position (A, a, V) which is such that following the insertion of the light-waveguide (Lw1) which is to be severed, and on the release of the actuating element, the clamping devices (Ke1, Ke2), the tensioning device (Ze) and the scoring device (Re) are automatically actuated consecutively.

2. A method as claimed in Claim 1, characterised in that following the severing of a light-waveguide (Lw1), the clamping device (Ke2) in which the light-waveguide (Lw1) is clamped is separately opened.

3. A device for severing light-waveguides (Lw1), in particular monomode fibres, comprising two clamping devices (Ke1, Ke2) which clamp the light-waveguide (Lw1) which is to be severed, a tensioning device (Ze) which axially pre-tensions the light-waveguide (Lw1) extending over an anvil (Ab), and a scoring device (Re) which scores the light-waveguide (Lw1) transversely to its axis at the severing position which is located above the anvil (Ab), for the implementation of the method claimed in Claim 1, characterised by a common actuating element with which the scoring device (Re), the two clamping devices (Ke1, Ke2) and the tensioning device (Ze) are each brought in an actuating stroke, against the force of a spring (F1, F2, F3, F4), into a prepared position (A, a, V) from which the clamping devices (Ke1, Ke2), the tensioning device (Ze) and the scoring device (Re) are consecutively activated by releasing the actuating element under the influence of the springs (F1, F2, F3, F4).

4. A device as claimed in Claim 3, characterised in that at least one of the two clamping devices (Ke1, Ke2) has a separate opening element (O1, O2).

5. A device as claimed in Claim 3 or 4, characterised in that the actuating element consists of a pivotable actuating plate (Bk).

6. A device as claimed in Claim 4 and 5, characterised in that the separate opening element (O2) passes through an opening in the actuating plate (Bk).

7. A device as claimed in one of Claims 3 to 6, characterised in that the scoring device (Re) comprises a scoring bit (Rm) which is attached to a leaf spring (Bf), where the leaf spring (Bf) is attached to a leaf spring carrier (Bft) which can be pivotted about an axis (1-1) aligned parallel to the light-waveguide (Lw1).

8. A device as claimed in Claim 7, characterised in that the leaf spring carrier (Bft) can be pivotted via the actuating element and a leaf-spring-like intermediate component (Zg) attached thereto.

9. A device as claimed in one of Claims 3 to 8, characterised in that the clamping devices (Ke1, Ke2) each consist of a holding jaw (Hb1 and Hb2) and a clamping jaw (Sb1, Sb2) which can be pivotted about an axis (1-1, 2-2) aligned transversely to the axis of the light-waveguide (Lw1).

10. A device as claimed in Claim 9, characterised in that the clamping jaw (Sb1, Sb2) can be pivotted via a pressure component (Ds1, Ds2) attached thereto.

11. A device as claimed in one of Claims 3 to 10, characterised in that the tensioning device (Ze) is formed by a clamping device (Ke1) which can be pivotted about an axis (3-3) aligned transversely to the axis of the light-waveguide (Lw1).

12. A device as claimed in Claim 11, characterised in that the clamping device (Ke1) can be pivotted by a coulisse carrier (Kt) which is attached to the actuating element.

13. A device as claimed in one of Claims 3 to 12, characterised in that the anvil (Ab) has a bearing surface which is curved in the longitudinal direction of the light-waveguide (Lw1).

14. A device as claimed in one of Claims 3 to 13, characterised in that a slot (Sch), aligned transversely to the axis of the light-waveguide (Lw1), is introduced into the bearing surface of the anvil (Ab).

## Revendications

1. Procédé pour sectionner des guides d'ondes optiques (Lw1), notamment des fibres monomode, selon lequel on maintient fermement le guide d'ondes optiques (Lw1), devant être sectionné, à l'aide de deux dispositifs de serrage (Ke1, Ke2), on lui applique une précontrainte dans la direction axiale à l'aide d'un dispositif de traction (Ze) sur une enclume (Ab) et l'on entaille transversalement par rapport à sa direction longitudinale, sur l'enclume (Ab), à l'aide d'un dispositif d'entaillage (Re), caractérisé par le fait qu'à l'aide d'un organe de manœuvre commun, on amène le dispositif d'entaillage (Re), les dispositifs de serrage (Ke1, Ke2) et le dispositif de traction (Ze), respectivement à l'encontre de la force d'un ressort, dans une position (A, a, V) telle que, après l'insertion du guide d'ondes optiques (Lw1) à sectionner et grâce au relâchement de l'organe de manœuvre, les dispositifs de serrage (Ke1, Ke2), le dispositif de traction (Ze) et le dispositif d'entaillage (Re) sont actionnés successivement de façon automatique.

2. Procédé suivant la revendication 1, caractérisé par le fait, qu'après le sectionnement d'un guide d'ondes optiques (Lw1), on ouvre séparément le dispositif de serrage (Ke2), dans lequel le guide d'ondes optiques (Lw1) est maintenu fermement.

3. Dispositif servant à sectionner des guides d'ondes optiques (Lw1), notamment des fibres monomode, comportant deux dispositifs de serrage (Ke1, Ke2) servant à maintenir fermement le guide d'ondes optiques (Lw1) à sectionner, un dispositif de traction (Ze) servant à appliquer une précontrainte axiale aux guides d'ondes optiques (Lw1) guidés sur une enclume (Ab), et un dispositif d'entaillage (Re) servant à entailler transversalement par rapport à la direction axiale, le guide d'ondes optiques (Lw1) au niveau du point de sectionnement situé au-dessus de l'enclume (Ab), pour la mise en œuvre du procédé suivant la revendication 1, caractérisé par un organe de manœuvre commun, à l'aide duquel le dispositif d'entaillage (Re), les deux dispositifs de serrage (Ke1, Ke2) et le dispositif de traction (Ze) peuvent être amenés sous l'effet d'une course de manœuvre, respectivement à l'encontre de la force d'un ressort (F1, F2, F3, F4), dans une position préparée (A, a, V), à partir de laquelle les dispositifs de serrage (Ke1, Ke2), le dispositif de traction (Ze) et le dispositif d'entaillage (Re) peuvent agir successivement sous l'action des ressorts (F1, F2, F3, F4), grâce à un relâchement de l'organe de manœuvre.

4. Dispositif suivant la revendication 3, caractérisé par le fait qu'au moins l'un des deux dispositifs de serrage (Ke1, Ke2) possède un élément d'ouverture séparé (O1, O2).

5. Dispositif suivant la revendication 3 ou 4, caractérisé par le fait que l'organe de manœuvre est réalisé sous la forme d'un volet de manœuvre pivotant (Bk).

6. Dispositif suivant les revendications 4 et 5, caractérisé par le fait que l'organe séparé d'ouverture (O2) s'étend à travers une ouverture du volet de manœuvre (Vk).

7. Dispositif selon l'une des revendications 3 à 6, caractérisé par le fait que le dispositif d'entaillage (Re) possède un outil d'entaillage (Rm) fixé à un ressort en forme de lame (Bf) qui est fixé à un support (Bft) pouvant pivoter autour d'un axe (1-1) parallèle au guide d'ondes optiques (Lw1).

8. Dispositif suivant la revendication 7, caractérisé par le fait que le support (Bft) du ressort en forme de lame peut pivoter sous l'action de l'organe de manœuvre et d'un organe intermédiaire (Zg) réalisé à la manière d'un ressort en forme de lame et monté sur le support.

9. Dispositif suivant l'une des revendications 3 à 8, caractérisé par le fait que les dispositifs de serrage (Ke1, Ke2) sont constitués respectivement par une mâchoire de retenue (Hb1 et Hb2) et par une mâchoire de serrage (Sb1, Sb2) pouvant pivoter autour d'un axe (1-1, 2-2) s'étendant transversalement par rapport à l'axe du guide d'ondes optiques (Sw1).

10. Dispositif suivant la revendication 9, caractérisé par le fait que la mâchoire de serrage (Sb1, Sb2) peut pivoter sous l'action d'un poussoir (Ds1, Ds2) monté sur ladite mâchoire.

11. Dispositif suivant l'une des revendications 3 à 10, caractérisé par le fait que le dispositif de traction (Ze) est formé par un dispositif de serrage (Ke) pouvant pivoter autour d'un axe (3-3) disposé transversalement par rapport à l'axe du guide d'ondes optiques (Lw1).

12. Dispositif suivant la revendication 11, caractérisé par le fait que le dispositif de serrage (Ke1) peut pivoter sous l'action d'un porte-coulisse (Kt) monté sur l'organe de manœuvre.

13. Dispositif suivant l'une des revendications 3 à 12, caractérisé par le fait que l'enclume (Ab) possède une surface d'appui cintrée dans la direction longitudinale du guide d'ondes optiques (Lw1).

14. Dispositif suivant l'une des revendications 3 à 13, caractérisé par le fait qu'une fente (Sch) disposée transversalement par rapport à l'axe du guide d'ondes optiques (Lw1) est ménagée dans la surface d'appui de l'enclume (Ab).

# FIG 1

# FIG 2

# FIG 3

# FIG 4

2

# FIG 5

# FIG 6